# EUROPÄISCHE PATENTSCHRIFT

(11) **EP 2 770 459 B1**
(45) Veröffentlichungstag und Bekanntmachung des Hinweises auf die Patenterteilung: **29.04.2015**
(21) Anmeldenummer: 14153589.8
(22) Anmeldetag: 03.02.2014
(51) Int. Cl.: G06K 7/10

(54) **Optoelektronischer Codeleser und Verfahren zur Diagnose und Verbesserung des Leseverhaltens**
Optoelectronic code reader and method for diagnosing and improving reading characteristics
Lecteur de code optoélectronique et procédé de diagnostic et d'amélioration du procédé de lecture

(30) Priorität: 22.02.2013 DE 102013101787
(43) Veröffentlichungstag der Anmeldung: 27.08.2014
(73) Patentinhaber: SICK AG, 79183 Waldkirch (DE)
(72) Erfinder: Blumenstein, Jörg, 79353 Bahlingen am Kaiserstuhl (DE); Lauer, Roman, 79111 Freiburg (DE); Harter, Thorsten, 77799 Ortenberg (DE); Gehring, Roland, 79215 Elzach-Prechtal (DE)
(74) Vertreter: Hehl, Ulrich

(56) Entgegenhaltungen:
- EP-A1- 2 003 599
- DE-U1- 29 622 847

## Beschreibung

Die Erfindung betrifft einen optoelektronischen Codeleser und ein Verfahren zur Diagnose und Verbesserung des Leseverhaltens von optoelektronischen Codelesern nach dem Oberbegriff von Anspruch 1 beziehungsweise 8.

Codeleser sind von Supermarktkassen, zur automatischen Paketidentifikation, Sortierung von Postsendungen, von der Gepäckabfertigung in Flughäfen und aus anderen Logistikanwendungen bekannt. Weitverbreitet sind Codescanner, bei denen ein Lesestrahl mittels eines Drehspiegels oder eines Polygonspiegelrads quer über den Code geführt wird. Mit der Weiterentwicklung der digitalen Kameratechnologie werden zunehmend auch kamerabasierte Codeleser eingesetzt. Statt Codebereiche abzuscannen, nimmt ein kamerabasierter Codeleser mit Hilfe eines Bildsensors Bilder der Objekte mit den darauf befindlichen Codes auf, und eine Bildauswertungssoftware extrahiert aus diesen Bildern die Codeinformation. Kamerabasierte Codeleser kommen problemlos auch mit anderen Codearten als eindimensionalen Strichcodes zurecht, die wie ein Matrixcode auch zweidimensional aufgebaut sind und mehr Informationen zur Verfügung stellen.

In einer wichtigen Anwendungsgruppe werden die Code tragenden Objekte an dem Codeleser vorbei gefördert. Ein Codescanner erfasst dabei die jeweils nacheinander in seinen Lesebereich geführten Codes. Alternativ liest in einem kamerabasierten Codeleser eine Zeilenkamera die Objektbilder mit den Codeinformationen sukzessive und zeilenweise mit der Relativbewegung ein. Damit die Objekte in beliebiger Orientierung auf dem Förderer angeordnet werden können, sind oft mehrere Codeleser an einem Lesetunnel vorgesehen, um Objekte von mehreren oder allen Seiten aufzunehmen.

Für einen Codescanner oder einen Lesetunnel stellt eine hohe Leserate eines der wichtigsten Qualitätskriterien dar. Lesefehler zwingen zu aufwändigen Fehlerbehebungen, wie dem erneuten manuellen Abscannen oder einer Nachsortierung.

Codescanner arbeiten üblicherweise als "black box", die entweder die fertig decodierten Codeinformationen oder eine Fehlermeldung liefert. Die verschiedenen internen und externen Rahmenbedingungen, die zu einer Fehllesung geführt haben, sind deshalb nicht nachvollziehbar. Das macht eine systematische Fehleranalyse und Verbesserung der Leserate extrem schwer, da die Fehllesungen und deren Ursachen nicht nachvollzogen werden können.

Von kamerabasierten Codelesern ist bekannt, dass die erfassten Bilddaten zur weiteren Verarbeitung und Diagnose ausgegeben werden. Beispielsweise offenbart die EP 2 003 599 A1 einen Codeleser, welcher Bilddaten zusammen mit Positionsdaten erkannter Objekt- oder Codebereiche und, soweit schon erfasst, Codeinformationen in decodiertem Klartext überträgt. Diese Informationen werden in einer strukturierten Datei ausgegeben und zu Diagnosezwecken grafisch aufbereitet in einem gemeinsamen Bild gezeigt. Allerdings genügen diese Informationen nicht, um die Rahmenbedingungen einer Fehllesung im Nachhinein zu analysieren. Zudem fehlt es an einer Filtermöglichkeit, um nur bestimmte Bilddaten beispielsweise von Fehllesungen zu erfassen, so dass im praktischen Betrieb schon nach kurzer Zeit eine nicht mehr handhabbare Datenmenge entsteht.

Die EP 1 357 506 B1 beschreibt einen weiteren Codeleser, welcher Bilder zu Fehllesungen komprimiert und speichert. Auch hier wird die nachträgliche Fehleranalyse erschwert, weil lediglich die Bilddaten selbst gespeichert werden. Außerdem bleiben die Bilddaten lokal gespeichert, so dass es keine einfache Möglichkeit gibt, Fehllesungen von einer Vielzahl von Codelesern an unterschiedlichen Standorten zu sammeln.

Aus der DE 296 22 847 U1 ist eine optoelektronische Vorrichtung zum Erkennen von Marken bekannt. Dabei können die zum Lesen von Marken verwandten Lichtstrahlen zugleich nach Art einer Datenlichtschranke zum Datenaustausch verwendet werden, um Parametersätze auszutauschen, welche Betriebsarten der Vorrichtung umschalten. Es ist daher Aufgabe der Erfindung, die Diagnose und Fehleranalyse für einen Codeleser zu verbessern. Anspruch 1 ist gegenüber diesem Dokument abgegrenzt.

Diese Aufgabe wird durch einen optoelektronischen Codeleser und ein Verfahren zur Diagnose und Verbesserung des Leseverhaltens von optoelektronischen Codelesern nach Anspruch 1 beziehungsweise 8 gelöst. Dabei geht die Erfindung von dem Grundgedanken aus, zusätzliche Informationen über Lesevorgänge außer dem Deco dierergebnis selbst unter bestimmten Umständen nicht direkt zu verwerfen, sondern über eine Schnittstelle auszugeben. Zu diesen Informationen zählen nicht nur die Bilddaten, sondern auch die Rahmenbedingungen des jeweiligen Lesevorgangs, die als Parameter der Lesesituation mit ausgegeben werden. Bei einer späteren Analyse oder Nachbearbeitung liegen dann nicht nur die bloßen Bilddaten vor, sondern ebenfalls die Informationen, wie diese Bilddaten aufgenommen wurden. Dadurch wird die Verbesserung von Lesealgorithmen erleichtert, welche eine beispielsweise in den ausgegebenen Informationen festgehaltene Fehllesung zukünftig vermeidet. Indem die Daten auf das Auslöseereignis hin an der Schnittstelle verfügbar gemacht werden, wird der Zugriff gegenüber einem Speichern in dem Codeleser deutlich vereinfacht, um Bilddaten und Parameter auch über große Entfernungen und von einer Vielzahl von Codelesern auszulesen.

Die Erfindung hat den Vorteil, dass Lesedaten auf einfache Weise gesammelt werden, um sie im Nachgang zu visualisieren, zu analysieren oder nachzubearbeiten. Dadurch wird das Testen und Optimieren der Decodierverfahren erheblich erleichtert, mit denen die Auswertungseinheit Codeinformationen aus den Codebereichen zu erfassen versucht. Im Ergebnis wird so eine beschleunigte Verbesserung der Leserate erreicht.

Der Codeleser ist bevorzugt als Codescanner ausgebildet und weist einen Lichtsender mit einer Sendeoptik zum Aussenden eines Lesestrahls sowie eine bewegliche Ablenkeinheit auf, um den Lesestrahl periodisch in dem Erfassungsbereich abzulenken. Aus dieser Abtastung resultiert ein Remissionswert für den jeweiligen Scanwinkel, so dass auch ein Codescanner zeilenweise Bilddaten erfasst. In zahlreichen wichtigen Anwendungen befinden sich Codeleser und Erfassungsbereich in Relativbewegung, etwa wenn ein Handgerät über den Erfassungsbereich geschwenkt wird oder wenn der Codeleser an einem Förderband installiert wird, um Code auf darauf geförderten Objekten zu lesen. Derartige Relativbewegungen sorgen dafür, dass ein Objekt und ein Codebereich sukzessive zeilenweise erfasst wird, so dass nicht nur Bildzeilen, sondern zweidimensionale Bilder entstehen. Das gilt für Codescanner und eine Zeilenkamera in einem kamerabasierten Codeleser gleichermaßen.

Das Auslöseereignis ist bevorzugt eines der Folgenden: Auf Anforderung, bei Fehllesung, bei erfolgreicher Lesung, bei jeder Lesung oder bei Erfüllen einer speziellen Bedingung. Durch Einstellen des Auslöseereignisses lässt sich die Datenmenge begrenzen und steuern, welche Ereignisse tatsächlich im Nachhinein betrachtet werden sollen. Es gibt viele weitere denkbare Auslöseereignisse, die von dem Codeleser zu Auswahl gestellt oder sogar benutzerdefiniert eingegeben werden, etwa die Ausgabe von Bildern zu bestimmten Zeitpunkten oder in bestimmen Zeitabständen, die Ausgabe von besonders hellen oder dunklen Bildern oder Auslöseereignisse, die mit dem Codeinhalt in Verbindung stehen, etwa die Kennzeichnung eines Objekts mit einem bestimmten, besonders wichtigen Adressaten oder der Hinweis auf eine besonders vorsichtig zu behandelnde oder wertvolle Ware.

Der Codeleser weist bevorzugt eine Kommunikationseinrichtung zur Übertragung von Bilddaten und Parametern nach einem Kommunikationsprotokoll auf, wobei die Kommunikationseinrichtung als Master beziehungsweise Host oder als Slave beziehungsweise Client ausgebildet ist. Die Schnittstelle dient dann dazu, die Bilddaten und Parameter über ein entsprechendes Kommunikationssystem auszugeben. Dabei kann der Codeleser als Datenquelle dienen und seine eigenen Leseereignisse einspeisen, aber auch Leseereignisse von angeschlossenen Codelesern sammeln, um sie dann gemeinsam für eine Diagnose bereitzustellen.

Die Kommunikationseinrichtung ist bevorzugt für die Vernetzung mit anderen Codelesern ausgebildet. Diese Codeleser bilden beispielsweise einen Lesetunnel, bei dem jeder Codeleser für eine bestimmte Perspektive zuständig ist, oder beobachten verschiedene Erfassungsbereiche, wie mehrere nebeneinander geführte Förderbänder.

Die Kommunikationseinrichtung weist bevorzugt einen Webserver auf. Das ermöglicht einen besonders einfachen Zugriff über die Schnittstelle, bei dem das zugreifende Gerät lediglich einen üblichen Webbrowser statt einer dedizierten Diagnose- und Konfigurationssoftware benötigt. Die Kommunikationseinrichtung kann aber alternativ irgend ein anderes bekanntes Protokoll für drahtgebundene und drahtlose Kommunikation unterstützen. Als ein Beispiel sei das FTP-Protokoll genannt, bei dem der Codeleser sowohl als Server wie als Host fungieren kann.

Der Codeleser weist bevorzugt eine Beleuchtung zum Aussenden eines Lichtsignals auf, wobei die Auswertungseinheit dafür ausgebildet ist, mittels eines Lichtlaufzeitverfahrens einen Abstand oder ein Abstandsprofil des Erfassungsbereichs oder des Codebereichs zu bestimmen. Im Falle eines Codescanners wird die Beleuchtung von dem Lesestrahl gebildet. Die Abstände können für zahlreiche Funktionen genutzt werden, beispielsweise um eine Fokuslage einer Empfangsoptik des Codelesers einzustellen, aber auch um Bilddaten nach Objekten und Codebereichen zu segmentieren oder Volumina von Objekten zu vermessen.

Die Bilddaten weisen bevorzugt eine Entfernungskarte und/oder ein Remissionsbild auf. Das Remissionsbild enthält die Grauwerte oder nach einer Binarisierung die reinen Schwarz-Weiß-Werte der Strukturen im Erfassungsbereich, die mit einem Bildsensor eines kamerabasierten Codelesers oder dem Lesestrahl eines Codescanners gewonnen werden. Das Distanzbild besteht aus ortsaufgelösten Abstandswerten, die beispielsweise mittels eines Lichtlaufzeitverfahrens gewonnen werden. Die Abstandswerte sind ebenso Zahlenwerte wie die Werte für die Pixel des Remissionsbildes und können insbesondere mittels Falschfarben dargestellt werden. Es sind unterschiedliche Auflösungen der ausgegebenen Bilder denkbar, etwa ein hochaufgelöstes Binärbild zum Nachvollziehen der Decodierung, ein geringer aufgelöstes Remissionsbild mit Grauwerten für die Beurteilung der Belichtungssituation oder ein geringer aufgelöstes Distanzbild zur Einschätzung der Objekte oder der geeigneten Fokuslage.

Die Parameter der Lesesituation umfassen bevorzugt mindestens eines der Folgenden: Fokuseinstellung, Beleuchtungsstärke, Scanfrequenz, Abstand zu dem Codebereich, eigene Position und/oder eigene Orientierung des Codelesers gegenüber dem Erfassungsbereich. Wird der Erfassungsbereich wie oben beschrieben in einer Relativbewegung zeilenweise erfasst, so kommen weitere interessante Parameter hinzu, wie die Auflösung der Bilddaten in Bewegungsrichtung oder die Geschwindigkeit der Relativbewegung.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Das Verfahren dient vorzugsweise dazu, Leseereignisse von Fehllesungen mittels Zugriff über die Schnittstelle am Betriebsort oder sogar im Fernzugriff über ein Netzwerk zu sammeln und auf einem zentralen Server zu speichern. Dadurch wird eine umfassende Datenbank von schwierigen oder sogar bisher ungelösten Lesesituationen einschließlich der erfassten Bilddaten und der Parameter der Rahmenbedingungen aufgebaut. Mittels dieser Datenbank können dann einfach und wirkungsvoll verschiedene Decodierungsverfahren entwickelt, optimiert und getestet werden.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische dreidimensionale Übersichtsdarstellung der beispielhaften Montage eines Codelesers über einem Förderband, auf dem Objekte mit zu lesenden Codes gefördert werden;
- Fig. 2: eine Übersichtsdarstellung über den Zyklus, mit dem eine Datenbank von ungelösten Lesesituationen aufgebaut und mit deren Hilfe die Leserate von Codelesern verbessert wird.

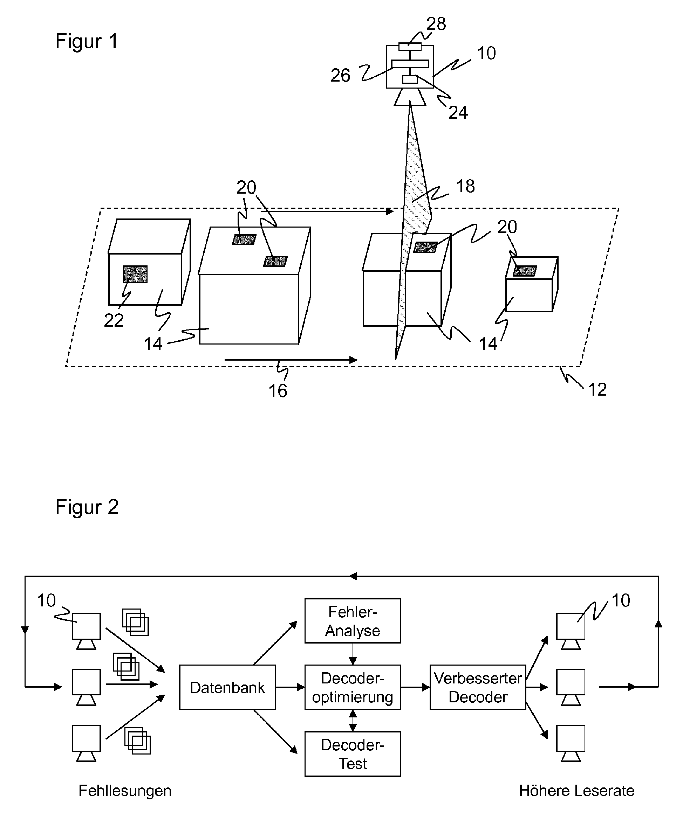

Figur 1 zeigt einen optoelektronischen Codeleser 10, der über einem Förderband 12 montiert ist, welches Objekte 14, wie durch den Pfeil 16 angedeutet, durch den Erfassungsbereich 18 des Codelesers 10 fördert. Die Objekte 14 tragen an ihren Außenflächen Codebereiche 20, die von dem Codeleser 10 erfasst und ausgewertet werden. Diese Codebereiche 20 können von dem Codeleser 10 nur dann erkannt werden, wenn sie auf der Oberseite oder zumindest von oben sichtbar angebracht sind. Daher kann abweichend von der Darstellung in Figur 1 zum Lesen eines etwa seitlich oder unten angebrachten Codes 22 eine Mehrzahl von Codelesern 10 aus verschiedenen Richtungen montiert sein, um eine sogenannte Omnilesung aus allen Richtungen zu ermöglichen. Die Anordnung der mehreren Codeleser 10 zu einem Lesesystem erfolgt in der Praxis meist als Lesetunnel.

Der Erfassungsbereich 18 des Codelesers 10 ist in Figur 1 als eine einzige Ebene dargestellt. Dies ist bei einem Codescanner der Fall, der diese Ebene mittels einer nicht dargestellten drehbaren Ablenkeinheit und eines gebündelten Lesestrahls abtastet. Dieser Lesestrahl wird von einem Lichtempfänger 24 empfangen und in ein elektrisches Intensitätssignal umgewandelt, das in einer Auswertungseinheit 26 weiter verarbeitet wird. Ebenso ist denkbar, dass der Lichtempfänger ein Bildsensor ist, beispielsweise ein CCD- oder CMOS-Chip mit einer matrixförmigen oder einer zeilenförmigen Anordnung von lichtempfindlichen Pixelelementen. Indem die Objekte 14 in der Förderrichtung 16 zeilenweise aufgenommen werden, lässt sich nach und nach in der Auswertungseinheit 26 ein Gesamtbild der vorbeigeförderten Objekte 20 zusammensetzen. Bei Barcodes genügt zum Decodieren eine Bildzeile, sofern sie nicht ausgerechnet parallel zu den Codeelementen liegt, so dass ein Zusammenfügen nicht zwingend erfolgen muss. Das Zusammenfügen ist bei einer gleichmäßigen Förderung der Objekte 14 in stationärem Aufbau relativ einfach zu lösen, besonders wenn die Fördereinrichtung 16 Weg- oder Geschwindigkeitsmessdaten liefert. Dennoch ist denkbar, den Sensor 10 auch als mobiles Gerät, beispielsweise Handgerät, einzusetzen und jeweils an dem zu lesenden Bereich vorbeizuführen.

Hauptaufgabe des Codelesers 10 ist, die Codebereiche 20 zu erkennen und die dort angebrachten Codes auszulesen, zu dekodieren und dem jeweils zugehörigen Objekt 14 zuzuordnen. Dazu ist in der Auswertungseinheit 26 mindestens ein Decoder implementiert, der aus den Intensitäts- beziehungsweise Bilddaten den Code ausliest. Der Codeleser 10 weist eine Schnittstelle 28 auf, um die decodierten Codeinformationen und weitere Informationen auszugeben, auf die im Folgenden näher eingegangen wird. Zusätzlich kann die Auswertungseinheit 26 dazu ausgebildet sein, mittels eines Lichtlaufzeitverfahrens den Abstand zu einem Codebereich oder sogar ein ganzes Abstandsprofil der Objekte 14 auf dem Förderband 12 zu bestimmen.

Von einem derartigen Lesetunnel wird nämlich erwartet, dass Codes mit einer möglichst hohen Leserate korrekt erfasst werden. Um die verbleibenden Fehllesungen zu analysieren oder andere Diagnosen und Weiterverarbeitungen vorzunehmen, werden Informationen über die Lesesituation an der Schnittstelle 28 ausgegeben und gesammelt. Bei diesen Informationen kann es sich einerseits um die Bilddaten handeln, aus denen die Codeinformation gewonnen wurde oder bei einer Fehllesung gerade nicht gewonnen werden konnte, um ein dem Abstandsprofil entsprechendes Distanzbild oder um diverse Aufnahmeparameter wie die Fokuseinstellung, die Scanfrequenz, die Belichtungssituation und dergleichen. Um die dabei anfallende Datenmenge im Griff zu behalten, ist es möglich, ein Auslöseereignis vorzugeben, welches festlegt, ob die Informationen zu einem bestimmten Lesevorgang ausgegeben und gesammelt werden oder nicht.

Die Schnittstelle 28 kann in jeglicher bekannten Weise und insbesondere als serielle, Ethernet-, CAN-, SATA-, USB-, PClexpress-, FireWire- oder als drahtlose Schnittstelle ausgebildet sein. Die Auswertungseinheit 26 unterstützt als Kommunikationsknoten das jeweils notwendige Protokoll. Die Informationen werden entsprechend an einem stationären oder mobilen Computer im weitesten Sinne einschließlich Notebooks, Tablets oder Smartphones entgegengenommen und dort in entsprechenden Programmen weiterverarbeitet, analysiert oder visualisiert. In einer Ausführungsform ist in der Auswertungseinheit 26 ein Webserver implementiert, so dass es auf dem Computer keiner speziellen Software bedarf, um auf die Informationen zuzugreifen.

Die Ausgabe der Informationen kann in vielfältiger Weise parametriert werden. Dazu zählen eher formale Einstellungen wie das Bildformat ausgegebener Bilddaten oder die Zugriffsart und die Adresse eines Servers, beispielsweise eines FTP-Servers, an den die Informationen gesendet werden sollen. Umgekehrt ist auch denkbar, den Codeleser 10 als Server zu konfigurieren, so dass dort Informationen vernetzter Codeleser 10 beispielsweise des gleichen Lesetunnels gesammelt werden.

Weiterhin kann spezifiziert werden, welche Leseereignisse als interessant angesehen werden, indem das Auslöseereignis für eine Ausgabe der Informationen festgelegt wird. Einige Beispiele von Auslöseereignissen sind auf Anforderung ("by master"), bei Fehllesung ("on no read"), bei erfolgreicher Lesung ("on good read"), für jeden Lesevorgang ("on every trigger") oder spezielle Bedingungen, die beispielsweise von Zeitpunkten oder den Codeinhalten abhängen ("user condition"). Durch solche Auslöseereignisse werden Datenmengen begrenzt und die erfassten Daten auf das eingeschränkt, was tatsächlich analysiert werden soll.

Schließlich ist vorzugsweise einstellbar, welche Informationen ausgegeben werden. Möglich sind beispielsweise: die Scanfrequenz und Spiegelpositionen entsprechend dem Codebereich 20 in einem Codescanner, der Erfassungszeitpunkt, auch in Einheiten der damit direkt zusammenhängenden Förderposition, die Anzahl, Position und/oder Geometrie im Lesebereich 18 erkannter Objekte 14 oder Codebereiche 20, eine Fokuslage, die parametrierte eigene Position und Orientierung des Codelesers 20 gegenüber dem Förderband 12 oder einer anderen Referenz sowie Parameter über die Beleuchtungssituation.

Parallel zu diesen Informationen, welche die Rahmenbedingungen des Lesevorgangs erfassen, werden die Bilddaten ausgegeben, auf deren Basis decodiert wurde oder, im Falle einer Fehllesung, in denen sich ein Code befindet, der aber nicht gelesen wurde. Diese Bilddaten werden vorzugsweise als hochaufgelöstes, binäres Schwarz-Weiß-Bild ausgegeben. Als zusätzliche Bilddaten können Grauwertbilder oder ein Distanzbild ausgegeben werden.

Indem diese Daten in gewünschter Form an der Schnittstelle 28 bereitgestellt werden und damit für Direkt- und Fernzugriff zugänglich sind, kann auf einfache Weise eine Datenbank von bestimmten Lesevorgängen eines speziellen Codelesers 10, eines speziellen Lesetunnels, aber auch einer ganzen Familie von weltweit verteilten Codelesern 10 aufgebaut werden. Ein unmittelbarer Nutzen könnte darin liegen, die Informationen einer Fehllesung direkt im Nachgang nochmals extern mit mächtigeren Decodierern nachzubearbeiten, um doch noch eine automatische Lesung zu ermöglichen.

Eine besonders wichtige Anwendung der Datenbank ist jedoch die Fehleranalyse und Verbesserung entweder der speziellen Installation, die aus irgendeinem Grund ungünstig ist, oder des Codelesers 10 und insbesondere von dessen Decodierverfahren in der Auswertungseinheit 26.

Dieser Verbesserungszyklus wird in Figur 2 illustriert. Eine Vielzahl von Codelesern 10 trägt Informationen über Fehllesungen in einer Datenbank zusammen. Auf deren Basis finden dann zunächst eine Fehleranalyse und im Anschluss eine Decoderoptimierung statt, um diese Fehler zukünftig zu vermeiden. Die verbesserten Decoder können unmittelbar an der Datenbank mit einer Vielzahl schwieriger Lesesituationen getestet werden, so dass ein hier erfolgreicher Decoder mit hoher Wahrscheinlichkeit auch im Feld eine verbesserte Leserate zeigen wird. Dieser optimierte Decoder wird dann in den Codelesern 10 implementiert, und ein weiterer Verbesserungszyklus kann beginnen.

## Patentansprüche

1. Optoelektronischer Codeleser (10), der ein Lichtempfangselement (24) zur Umwandlung von Empfangslicht aus einem Erfassungsbereich (18) in Bilddaten, eine Auswertungseinheit (26) zum Ausführen eines Lesevorgangs, bei dem ein Codebereich (20) in den Bilddaten erkannt und dessen Codeinhalt ausgelesen wird sowie eine Schnittstelle (28) aufweist,
**dadurch gekennzeichnet,**
**dass** die Auswertungseinheit (26) dafür ausgebildet ist, auf ein vorgebbares Auslöseereignis hin die Bilddaten eines Lesevorgangs und Parameter der Lesesituation des Lesevorgangs, unter denen die Bilddaten erfasst wurden, über die Schnittstelle (28) auszugeben, dass das Auslöseereignis eines der Folgenden ist: Auf Anforderung, bei Fehllesung, bei erfolgreicher Lesung oder bei jeder Lesung, und dass die Parameter der Lesesituation mindestens eines der Folgenden umfassen: Fokuseinstellung, Beleuchtungsstärke, Scanfrequenz, Abstand zu dem Codebereich (20), eigene Position und/oder eigene Orientierung des Codelesers (10) gegenüber dem Erfassungsbereich (12, 18).

2. Codeleser (10) nach Anspruch 1,
der als Codescanner ausgebildet ist und einen Lichtsender mit einer Sendeoptik zum Aussenden eines Lesestrahls sowie eine bewegliche Ablenkeinheit aufweist, um den Lesestrahl periodisch in dem Erfassungsbereich (18) abzulenken.

3. Codeleser (10) nach einem der vorhergehenden Ansprüche,
mit einer Kommunikationseinrichtung (26) zur Übertragung von Bilddaten und Parametern nach einem Kommunikationsprotokoll, wobei die Kommunikationseinrichtung als Master oder als Slave ausgebildet ist.

4. Codeleser (10) nach Anspruch 3,
wobei die Kommunikationseinrichtung (26) für die Vernetzung mit anderen Codelesern (10) ausgebildet ist.

5. Codeleser (10) nach Anspruch 3 oder 4,
wobei die Kommunikationseinrichtung (26) einen Webserver aufweist.

6. Codeleser (10) nach einem der vorhergehenden Ansprüche,
der eine Beleuchtung zum Aussenden eines Lichtsignals aufweist, und wobei die Auswertungseinheit (26) dafür ausgebildet ist, mittels eines Lichtlaufzeitverfahrens einen Abstand oder ein Abstandsprofil des Erfassungsbereichs (18) oder des Codebereichs (20) zu bestimmen.

7. Codeleser (10) nach einem der vorhergehenden Ansprüche,
wobei die Bilddaten eine Entfernungskarte und/oder ein Remissionsbild aufweisen.

8. Verfahren zur Diagnose und Verbesserung des Leseverhaltens von optoelektronischen Codelesern (10), bei dem aus mindestens einem Codeleser (10) Bilddaten von Lesevorgängen und Parameter der Lesesituation des jeweiligen Lesevorgangs, unter denen die Bilddaten erfasst wurden, auf ein Auslöseereignis hin über eine Schnittstelle (28) ausgelesen und die Bilddaten und Parameter zum Aufbau einer Datenbank genutzt werden, anhand derer Decodierungsverfahren getestet und verbessert werden, wobei das Auslöseereignis eines der Folgenden ist: Auf Anforderung, bei Fehllesung, bei erfolgreicher Lesung oder bei jeder Lesung, und wobei die Parameter der Lesesituation mindestens eines der Folgenden umfassen: Fokuseinstellung, Beleuchtungsstärke, Scanfrequenz, Abstand zu dem Codebereich (20), eigene Position und/oder eigene Orientierung des Codelesers (10) gegenüber dem Erfassungsbereich (12, 18).

## Claims

1. An optoelectronic code reader (10) having a light reception element (24) for converting reception light from a detection area (18) into image data, an evaluation unit (26) for performing a read operation in which a code region (20) is detected in the image data and its code content is read, and an interface (28), **characterized in that** the evaluation unit (26) is configured to output the image data of a read operation and parameters of the reading situation of the read operation when the image data was captured via the interface (28) following a predeterminable trigger event, **in that** the trigger event is one of the following: on request, on read error, on successful read, or on each read, and **in that** the parameters of the reading situation comprise at least one of the following: focus setting, illumination, scanning frequency, distance to a code region (20), own position and/or own orientation of the code read (10) relative to the detection area (12,18).

2. The code reader (10) according to claim 1,
which is configured as a code scanner and comprises a light transmitter having transmission optics for transmitting a reading beam as well as a movable deflection unit in order to periodically deflect the reading beam in the detection area (18).

3. The code reader (10) according to any of the preceding claims,
having a communication device (26) for transmitting image data and parameters according to a communication protocol, wherein the communication device (26) is configured as a master or as a slave.

4. The code reader (10) according to claim 3,
wherein the communication device (26) is configured to form a network with other code readers (10).

5. The code reader (10) according to claim 3 or 4,
wherein the communication device (26) comprises a web server.

6. The code reader (10) according to any of the preceding claims,
having an illumination for transmitting a light signal, and wherein the evaluation unit (26) is configured to determine the distance or a distance profile of the detection area (18) or the code region (20) by means of a light time of flight method.

7. The code reader (10) according to any of the preceding claims,
wherein the image data comprise a depth map and/or a remission image.

8. A method for the diagnosis and improvement of the reading performance of optoelectronic code readers (10), wherein image data of read operations and parameters of the reading situation of the respective read operation when the image data was captured are read from at least one code reader (10) via an interface (28) following a trigger signal, and wherein the image data and parameters are used to build up a database by means of which decoding methods are tested and improved, wherein the trigger event is one of the following: on request, on read error, on successful read, or on each read, and in that the parameters of the reading situation comprise at least one of the following: focus setting, illumination, scanning frequency, distance to a code region (20), own position and/or own orientation of the code read (10) relative to the detection area (12, 18).

## Revendications

1. Lecteur de code optoélectronique (10), qui comprend un élément récepteur de lumière (24) pour convertir de la lumière reçue provenant d'une zone de détection (18) en données images, une unité d'évaluation (26) pour exécuter un processus de lecture, dans lequel une zone de code (20) dans les données images est reconnue et le contenu de son code est lu, et qui comprend une interface (28),
**caractérisé en ce que** l'unité d'évaluation (26) est réalisée pour, suite à un événement déclencheur prédéterminable, fournir les données images d'un processus de lecture et des paramètres de la situation de lecture du paramètre de lecture, sous lesquels les données images ont été saisies, via l'interface (28), **en ce que** l'événement déclencheur est l'un des suivants : sur requête, en cas de lecture erronée, en cas de lecture avec succès, ou à chaque lecture, et **en ce que** les paramètres de la situation de lecture comprennent l'un au moins des suivants : réglage de focalisation, intensité d'éclairage, fréquence de balayage, distance vis-à-vis de la zone de code (20), propre position et/ou propre orientation du lecteur de code (10) par rapport à la zone de détection (12, 18).

2. Lecteur de code (10) selon la revendication 1,
qui est réalisé sous forme de scanner de code et qui comprend un émetteur de lumière avec une optique d'émission pour émettre un rayon de lecture, ainsi qu'une unité de déflexion mobile afin de défléchir le rayon de lecture périodiquement dans la zone de détection (18).

3. Lecteur de code (10) selon l'une des revendications précédentes,
comprenant un dispositif de communication (26) pour la transmission de données images et de paramètres d'après un protocole de communication, ledit dispositif de communication étant réalisé sous forme de dispositif maître ou esclave.

4. Lecteur de code (10) selon la revendication 3,
dans lequel le dispositif de communication (26) est réalisé pour la mise en réseau avec d'autres lecteurs de code (10).

5. Lecteur de code (10) selon la revendication 3 ou 4,
dans lequel le dispositif de communication (26) comprend un serveur Web.

6. Lecteur de code (10) selon l'une des revendications précédentes,
qui comprend un éclairage pour émettre un signal lumineux, et dans lequel l'unité d'évaluation (26) est réalisée pour déterminer, au moyen d'une procédure de temps de parcours de la lumière, une distance ou un profil de distance de la zone de surveillance (18) ou de la zone de code (20).

7. Lecteur de code (10) selon l'une des revendications précédentes,
dans lequel les données images comportent une carte de distance et/ou une image de réémission.

8. Procédé pour le diagnostic et pour l'amélioration du comportement de lecture de lecteurs de code optoélectroniques (10), dans lequel, à partir d'au moins un lecteur de code (10), des données images de processus de lecture et des paramètres de la situation de lecture du processus de lecture respectif sous lesquels les données images ont été détectées, sont lus à partir d'un événement déclencheur via une interface (28), et les données images et les paramètres sont utilisés pour le montage d'une base de données au moyen de laquelle des procédés de décodage sont testés et améliorés, dans lequel l'événement déclencheur est l'un des suivants : sur requête, en cas de lecture erronée, en cas de lecture avec succès, ou à chaque lecture, et en ce que les paramètres de la situation de lecture comprennent l'un au moins des suivants : réglage de focalisation, intensité d'éclairage, fréquence de balayage, distance vis-à-vis de la zone de code (20), propre position et/ou propre orientation du lecteur de code (10) par rapport à la zone de détection (12, 18).
